# EUROPÄISCHE PATENTSCHRIFT

(11) **EP 4 587 402 B1**
(45) Veröffentlichungstag und Bekanntmachung des Hinweises auf die Patenterteilung: **11.11.2026**
(21) Anmeldenummer: 23711782.5
(22) Anmeldetag: 02.03.2023
(51) Int. Cl.: C04B 5/06, C04B 7/14, B01J 2/06, C21B 3/08

(54) **VERFAHREN ZUR HERSTELLUNG VON AMORPHEM SCHLACKENGLAS SOWIE VORRICHTUNG ZUR DURCHFÜHRUNG DES VERFAHRENS**
PROCESS FOR PREPARING AN AMORPHOUS SLAG GLASS AND DEVICE FOR CARRYING OUT THE PROCESS
PROCÉDÉ DE PRÉPARATION D'UN VERRE DE LAITIER AMORPHE ET DISPOSITIF DE MISE EN OEUVRE DU PROCÉDÉ

(30) Priorität: 22.03.2022 AT 732022
(43) Veröffentlichungstag der Anmeldung: 23.07.2025
(73) Patentinhaber: Radmat AG, 5442 Fislisbach (CH)
(72) Erfinder: Edlinger, Alfred, 6781 Bartholomäberg (AT)
(74) Vertreter: SONN Patentanwälte GmbH & Co KG
(86) Internationale Anmeldenummer: PCT/IB2023/051933
(87) Internationale Veröffentlichungsnummer: WO 2023/180834

(56) Entgegenhaltungen:
- EP-A1- 1 120 470
- WO-A1-2018/091959
- WO-A1-2020/124105
- WO-A1-2021/152386
- DE-T2- 60 106 242
- US-A- 5 092 932

## Beschreibung

Die vorliegende Erfindung betrifft ein Verfahren zur Herstellung von amorphem Schlackenglas sowie eine Vorrichtung zur Durchführung des erfindungsgemäßen Verfahrens. Die Veröffentlichungen WO 2021/152386 A1, DE 601 06 242 T2, WO 2018/091959 A1, US 5,092,932 A, WO 2020/124105 A1 sowie EP 1 120 470 A1 offenbaren Verfahren und Vorrichtungen mit Bezug zum Gegenstand der vorliegenden Erfindung.

Bei der Verschlackung von Klärschlamm, Tiermehl, Knochenmehl und ähnlichen organischen Abfallstoffen, was durch eine Verbrennung bei Temperaturen zwischen ungefähr 1420°C - 1600°C erfolgt, fällt eine homogene Schlackenschmelze an, die neben beträchtlichen Mengen an Phosphaten auch Eisenspezies enthält. Eine Schlackenschmelze mit nicht näher definierten weiteren potentiellen Reaktionspartnern einer möglichen Redoxreaktion zwischen Phosphaten und Eisenspezies stellt nicht nur hinsichtlich der möglichen Bildung von Eisenphosphiden aus den Phosphaten und den Eisenspezies ein Problem dar, sondern lässt auch die wirtschaftlich sinnvolle Verwertbarkeit dieser in nicht unbeträchtlichen Mengen auftretenden Schlackenschmelze wünschenswert erscheinen.

Es ist daher Aufgabe der vorliegenden Erfindung, eine solche Schlackenschmelze zum einen unschädlich zu machen und zum anderen ein wertvolles Produkt daraus zu gewinnen.

Die vorliegende Erfindung stellt daher ein Verfahren zur Herstellung von amorphem Schlackenglas zur Verfügung.

Bisherige Verfahren zur Herstellung hydraulischer Bindemittel haben Schlackenschmelzen, die Phosphate und insbesondere P₂O₅ zusammen mit Eisenspezies enthalten, nicht in Betracht gezogen. Bei der vorliegenden Erfindung konnte jedoch überraschender Weise festgestellt werden, dass durch die Zugabe eines Oxidationsmittels und die damit einhergehende Bildung von Spinell beziehungsweise Magnetit aus den Eisenoxiden ein hydraulisches Bindemittel erhalten wird, welches sich durch eine besonders hohe Hydraulizität auszeichnet und welches zusammen mit Branntkalk, ZnO, Soda, Wasserglas, Portlandklinker oder Gips vermischt eine wertvolle hydraulisch wirksame Zementkomponente darstellt. Der Eisengehalt dieser Schlacken wird durch den Oxidationsvorgang während der Verglasung in Magnetit übergeführt.

Beim erfindungsgemäßen Verfahren weist die Schlackenschmelze einen P₂O₅-Gehalt von 7,5 Gew.-% bis 30 Gew.-%, weiter bevorzugt 12,5 Gew.-% bis 20 Gew.-% und besonders bevorzugt von 17 Gew.-% bis 19 Gew.-% aufweist. Insbesondere wird beim erfindungsgemäßen Verfahren eine Schlackenschmelze eingesetzt, die einen P₂O₅-Gehalt von 15,84 Gew.-% aufweist und darüber hinaus CaO in Mengen von 27,28 Gew.-%, MgO in Mengen von 3,08 Gew.-%, K₂O in Mengen von 0,704 Gew.-%, SiO₂ in Mengen von 25,08 Gew.-%, Al₂O₃ in Mengen von 13,2 Gew.-%, Fe₂O₃ in Mengen von 12,2 Gew.-% und SO₃ in Mengen von 1,32 Gew.-% enthält. Weitere Bestandteile können enthalten sein.

Um den Kühlschritt zur Granulierung der Schlackenschmelze zur Herstellung eines hochgradig amorphen hydraulischen Bindemittels möglichst rasch durchführen zu können, ist das Verfahren gemäß einer bevorzugten Ausführungsform der vorliegenden Erfindung dahingehend weitergebildet, dass die Basizität (CaO Gew.-%/SiO₂ Gew.-%) der Schlackenschmelze vor dem Kühlschritt durch Zugabe eines Kalkträgers oder eines Aluminiumträgers auf einen Wert von 0,85 bis 1,3, insbesondere auf einen Wert von 1,2 eingestellt wird. Die Einstellung der Basizität auf einen Wert in diesem Bereich sorgt dafür, dass die Schlackenschmelze eine niedrige Viskosität aufweist, sodass sie beim Kühlschritt eine möglichst große Oberfläche ausbildet und dadurch eine rasche Abkühlung stattfindet. Dies verhindert die Bildung von Schlackenkristallen, sodass im besten Fall ein vollständig amorphes Produkt als Schlackenglas erhalten wird.

Wenn eine Schlackenschmelze mit besonders hohem Gehalt an P₂O₅ zur Herstellung von amorphem Schlackenglas beim erfindungsgemäßen Verfahren eingesetzt wird, kann das Verfahren gemäß einer bevorzugten Ausführungsform der vorliegenden Erfindung dadurch verbessert werden, dass der Schlackenschmelze vor dem Kühlschritt elementares Aluminium zugesetzt wird und dass dabei gebildetes P₂ und CO aus der Gasphase abgezogen wird. Die Zugabe von elementarem Aluminium sorgt für eine aluthermische Reduktion des P₂O₅ zu gasförmigem P₂, welches aus der Gasphase abgezogen und in der Folge durch Kondensation gewonnen werden kann. Gleichzeitig wird auch der Gehalt an Fe₂O₃ durch Reduktion des Fe₂O₃ zu FeO (Fe³⁺ → Fe²⁺) vermindert. Hierbei stellt sich bei einem P₂O₅-Gehalt von etwa 3,5 Gew.-% eine Redoxgleichgewicht ein. Auf diese Weise wird nicht nur die Qualität des mit dem erfindungsgemäßen Verfahren hergestellten amorphen Schlackenglas sichergestellt, sondern darüber hinaus eine überaus reine Phosphorspezies gewonnen, die einen wertvollen Rohstoff darstellt. Die Zugabe von elementarem Aluminium erfolgt bevorzugt in einem Ausmaß, dass im gebildeten Schlackenglas ein Gleichgewicht der Gewichtanteile zwischen CaO, SiO₂ und Al₂O₃ erreicht wird. Bei hohen Gehalten an P₂O₅ werden bevorzugt ZnO, Zn-Halogenide organische Zn-Verbindungen wie Zn-Formiat und/oder Zn-Acetat und/oder anorganische Zn-Verbindungen eingesetzt, um hochfeste und biokompatible Spezialzemente zu erhalten. Ohne die genannte Zugabe von Zn-Spezies kann das gebildete Schlackenglas gegebenenfalls auch als Düngemittelkomponente mit einem hohen Gehalt an Kalk und Phosphat eingesetzt werden.

Die aluthermische Reduktion des P₂O₅ ist ausgesprochen exotherm, und es kann aufgrund dessen erforderlich sein, diese Reaktion zu zügeln, um zu hohe Temperaturen der Schlackenschmelze und eventuelle Verzugserscheinungen zu vermeiden. Aus diesem Grund kann es bevorzugt vorgesehen sein, Aluminiumoxid als Moderator der aluthermischen Reduktion zuzusetzen. In diesem Fall stellt Aluminiumoxid als Produkt der Oxidation des eingesetzten Aluminiums zur Reduktion des Phosphoroxids einen Moderator dar und auch relativ große Mengen zugegebenen Aluminiumoxids stellen für die Qualität des durch das erfindungsgemäße Verfahren herzustellenden hydraulischen Bindemittels kein Problem dar, da Aluminiumoxid bekanntermaßen ohne Weiteres zementgängig ist und die Frühfestigkeit derartiger Zemente signifikant erhöht.

Bei der Zugabe von Kohlenstoffträgern wird in der Regel Stückkoks mit hohen Anteilen an Koksstaub zur Beschleunigung der Reduktionskinetik durch die sehr hohe spezifische Oberfläche des Koksstaubs eingesetzt. Hierbei ist eine hohe Turbulenz zwischen Schmelze und Reduktionsmittel anzustreben.

Gemäß einer bevorzugten Ausführungsform der vorliegenden Erfindung kann die Schlackenreduktion auch dadurch erfolgen, dass der Schlackenschmelze vor dem Kühlschritt Calciumcarbid zugesetzt wird, bevorzugt zusammen mit Kohlestaub, und dass dabei gebildetes P₂ und CO aus der Gasphase abgezogen wird. Durch die Zugabe von Calciumcarbid, ggf. gemischt mit Kohlestaub, kommt es zu einer exothermen Reduktion, die ggf. durch Kohlestaub und die dadurch gleichzeitig ablaufende, endotherme Kohlenstoff-Reduktion moderiert werden kann. Dabei wird der entsprechende Oxidgehalt nach folgender Reaktionsgleichung reduziert:

P₂O₅ + CaC₂ + 2 C -> CaO +P₂ (Gas) + 4 CO (Gas)

Das hierbei gebildete CaO erhöht in sehr vorteilhafter Weise die Schlackenbasizität (CaO/SiO2) durch unmittelbare Reaktion in der Schlackenschmelze. FeO in der Schlackenschmelze reagiert bei weiterem Zusatz von Calciumcarbid ebenfalls reduktiv und exotherm nach der folgenden Gleichung:

3 FeO + CaC₂ -> 3 Fe (schmelzflüssig) + CaO + CO (Gas)

Auch hierbei wird die Basizität der Schlackenschmelze erhöht. Die Zugabe von CaC₂ führt darüber hinaus zu einer optimalen Entschwefelung des P-Gases, da die Schwefelverbindungen gleichsam vollständig in die Schlackenschmelze eingebunden werden.

Besonders vorteilhaft hinsichtlich des Schlackenendprodukts und insbesondere dessen Zementeigenschaften ist die Zugabe eines Al-Träger (Krätze bzw. Dross)-Calciumcarbid-Gemisches, da hier sowohl die Basizität wie auch der Al₂O₃-Gehalt der Schlacke in besonders vorteilhafter Weise vor der Granulation der Schlackenschmelze eingestellt werden kann. Die Zugabe von Kohlestaub bewirkt eine moderatere Reduktion und vermindert den Bedarf an teurem Calciumcarbid.

Alterativ oder zusätzlich kann es gemäß einer bevorzugten Ausführungsform der vorliegenden Erfindung vorgesehen sein, dass die Schlackenschmelze vor dem Kühlschritt einer elektrochemischen Reduktion von P₂O₅ unterzogen wird, bevorzugt bei einer Elektrodenspannung von 16 V bis 24 V, und dass dabei gebildetes P₂ als Kathodengas abgezogen wird. In aller Regel werden ungefähr 6,8 kWh Strom pro kg Phosphor benötigt. Bei Verwendung einer inerten Anode fällt O₂ als Anodengas an, bei Verwendung einer Graphitanode fällt CO als Anodengas an.

Eine Kombination der vorgennannten Reduktionsprozesse ist im Rahmen der vorliegenden Erfindung ebenfalls möglich. Mit den vorgenannten Reduktionsmethoden kann der Zielgehalt an restlichem Phosphat und Eisenoxid der Produktschlacke optimal geregelt eingestellt werden, um nach dem Kühlschritt ein wertvolles hydraulisches Bindemittel zu erhalten.

Wie bereits mehrfach erwähnt, ist die möglichst vollständige Verglasung der als Ausgangsprodukt des erfindungsgemäßen Verfahrens zur Herstellung eines hydraulischen Bindemittels eingesetzte Schlackenschmelze anzustreben. Zu diesem Zweck ist das Verfahren gemäß der vorliegenden Erfindung bevorzugt dahingehend weitergebildet, dass der Kühlschritt darin besteht, die Schlackenschmelze in ein Wasserbad zu dispergieren, wobei das Wasserbad für die Schlackenschmelze bevorzugt bei einer Temperatur zwischen 80°C und dem Siedepunkt vorgehalten wird, bevorzugt zwischen 85°C und dem Siedepunkt, weiter bevorzugt zwischen 90°C und dem Siedepunkt und insbesondere bevorzugt zwischen 95°C und dem Siedepunkt. Die Ausgangs-Schlackenschmelze wird gemäß dieser bevorzugten Verfahrensführung in ein Wasserbad eingebracht und im Wasserbad möglichst kleinteilig dispergiert, um einen raschen Übergang der Wärme von der Schlackenschmelze in das Wasserbad zu gewährleisten. Hierbei ist die oben erörterte Einstellung der Basizität der Schlackenschmelze und die damit einhergehende Reduktion der Viskosität von Nutzen, da eine Schlackenschmelze mit Basizitätswerten zwischen 0,85 und 1,3 beispielsweise durch Rühren im Wasserbad durch die beim Rühren auftretenden Scherkräfte dispergiert, **d.h.** zerteilt und zerkleinert wird. Für eine besonders rasche Abkühlung wird das Wasserbad bevorzugt bei erhöhten Temperaturen von über 80°C und dem Siedepunkt vorgehalten, sodass es beim Einbringen der Schlackenschmelze zu einem sofortigen Verdampfen des Wassers im Wasserbad kommt, sodass für das Kühlen der Schlackenschmelze sofort die Verdampfungsenthalpie des Wassers zur Verfügung steht, was bekanntermaßen zu einer Aufnahme besonders großer Wärmemengen durch das Wasser führt.

Selbstverständlich verdampfen hierbei große Mengen Wasser, und es bilden sich dementsprechend große Mengen an Brüden, weshalb das erfindungsgemäße Verfahren in diesem Zusammenhang bevorzugt dahingehend weitergebildet ist, dass beim Kühlschritt entstehender Brüden aus dem Wasserbad aufgefangen, kondensiert und dem Wasserbad wieder zugeführt wird, wobei die Kondensation bevorzugt in Form einer adiabaten Kompression durchgeführt wird zur Gewinnung von exergetisch nutzbarer Abwärme aus dem Brüden. Es kann hierbei ein geschlossener Dampfkreislauf gebildet werden, sodass bei Durchführung des erfindungsgemäßen Verfahrens keinerlei problematische Dämpfe austreten. Gemäß einer bevorzugten Ausführungsform erfolgt die Kondensation in Form einer adiabaten Kompression zur Gewinnung von Abwärme aus dem Brüden. Die adiabate Kompression von Brüden zur Gewinnung von Abwärme ist im Stand der Technik als Thermokompression bekannt und führt dazu, dass die Kondensationswärme der Brüden auf einem höheren Temperaturniveau anfällt, wodurch gegenüber einer isobaren Kompression durch Abkühlung auch ein großer Teil der Abwärme der Brüden als fühlbare Wärme durch Wärmetausch gewonnen werden kann.

Gemäß einer bevorzugten Ausführungsform der vorliegenden Erfindung wird beim Kühlschritt entstehender Brüden aus dem Wasserbad aufgefangen, kondensiert und dem Wasserbad wieder zugeführt, wobei der Brüden durch Kompression auf eine Temperatur zwischen 180°C und 220°C gebracht und die Wärme des Brüden zur Trocknung von mechanisch entwässertem Klärschlamm eingesetzt wird. Die Enthalpie des entstehenden Brüdendampfes (100°C, Normaldruck) der Siedewassergranulation kann mittels eines Brüdenverdichters (optional in Verbund mit einer adiabaten Dampfkompression) auf das genannte Temperaturniveau und bevorzugt auf ein Temperaturniveau von etwa 210°C gehoben werden und mit Vorteil besonders wirtschaftlich zur thermischen Trocknung von mechanisch entwässertem Klärschlamm mit ungefähr 25% Trockensubstanz auf etwa 60% Trockensubstanz herangezogen werden. Die vorangehende Zugabe von CaO in den noch nassen Klärschlamm führt zu einer Voreinstellung der Basizität und treibt Stickstoff aus dem Klärschlamm in Form von wertvollem Ammoniak (NH₃) aus.

Bei der Thermokompression werden die Brüden von 100°C und Umgebungsdruck auf 400°C und 13 bar Überdruck mittels eines Dampfkompressors verdichtet. Dazu werden 0,164 kWh/kg Brüden Verdichtungsarbeit geleistet. Nach der Verdichtung hat dieser Hochdruckdampf einen Wärmeinhalt von 0,905 kWh/kg, der bei dieser Temperatur durch Kondensation des Wasserdampfes über Wärmetausch **z.B.** in Form von Elektrizität rückgewinnbar ist. Bei einem realistischen Wirkungsgrad einer Dampfturbine können ungefähr 0,271 kWh/kg in Form von elektrischem Strom produziert werden. Somit können abzüglich der Verdichtungsarbeit etwa 0,1 kWh/kg Brüden in Form von elektrischem Strom aus diesem Prozess exportiert werden. Bei dem erfindungsgemäßen Verfahren fallen ca. 1100 kg Brüden pro Tonne Schlackenschmelze an, somit ergibt sich ein Stromexport von 110 kWh/t Schlackenschmelze. Daraus ergeben sich erhebliche CO₂-Einsparungen bei der Entsorgung der Schlackenschmelze.

Bei dem erfindungsgemäßen Verfahren wird gemäß einer bevorzugten Ausführungsform als Oxidationsmittel ein Sauerstoffträger eingesetzt, insbesondere Luft, O₂, CO₂, Wasser und/oder Wasserdampf.

Bei dem erfindungsgemäßen Verfahren und insbesondere bei einer Verfahrensführung, bei der der Kühlschritt in einem Wasserbad und insbesondere in einem Wasserbad durchgeführt wird, das bei einer Temperatur zwischen 80° und dem Siedepunkt vorgehalten wird, fällt ein mikroporöses und in Form von Hohlkugeln granuliertes, Schlackenglas an, welches sich aufgrund dieser Eigenschaft bevorzugt dahingehend zur weiteren Verarbeitung anbietet, dass das granulierte Schlackenglas gemahlen wird, bevorzugt auf Korngrößen von kleiner als 80 Mikrometer. Das Vermahlen des granulierten Schlackenglases, das beim erfindungsgemäßen Verfahren gebildet wird, erfordert aufgrund der überaus großen Porosität, die durch den Gehalt an P₂O₅ im Vergleich zu Schlackengläsern, die weniger oder kein P₂O₅ enthalten, noch gesteigert ist, beim Vermahlen nur eine sehr geringe Mahlarbeit und es auch zu keinerlei Verklebungen an den Mahlwerkzeugen. Es gelingt daher mit geringem Aufwand, sehr geringe Korngrößen aus dem granulierten Schlackenglas zu erhalten, und bevorzugt Korngrößen von kleiner als 80 Mikrometer. Diese sind sehr leicht zementgängig und hoch reaktiv, um die Hydraulizität des erfindungsgemäß hergestellten hydraulischen Bindemittels noch weiter zu steigern. Hiermit geht eine besonders vorteilhafte Zementfrühfestigkeit einher.

Dadurch, dass das sehr poröse Schlackenglas gemahlen wird, kommt es zu einer mehr oder weniger vollständigen Abscheidung der durch den Oxidationsschritt abgeschiedenen Eisenanteile aus dem Rest der Schlacke, wobei die Eisenanteile als Magnetit anfallen. Dies ermöglicht es, die Eisenanteile aus dem gemahlenen Schlackenglas magnetisch abzuscheiden, wie dies einer bevorzugten Ausführungsform der vorliegenden Erfindung entspricht.

Dieser Magnetit stellt ein hochwertiges synthetisches Eisenerz dar und kann beispielsweise bei der Verhüttung zu Roheisen, als Sinterhilfsmittel bei der Klinkerherstellung, als Adsorbermasse oder als Katalysator bei der Ammoniaksynthese nach dem Haber-Bosch-Verfahren oder bei der homogenen Wassergas-Shift-Reaktion eingesetzt werden. In die Magnetitphase werden darüber hinaus diverse Spinellbildner, wie **z.B.** Chrom, eingebaut, wodurch eine hochreine Zementkomponente entsteht, in der Schwermetalle kaum zu finden sind.

Der eventuelle Schwefelgehalt der Ausgangsschlackenschmelze wird durch den Oxidationsvorgang sulfatisch in das amorphe Schlackenglas unter Gipsbildung eingebaut, was die zementtechnische Reaktivität des Schlackenglases weiter erhöht. Die Oxidation von in der Ausgangsschlackenschmelze enthaltenem Schwefel zu Sulfaten wird durch den bei der Oxidation ebenfalls entstehenden Magnetit aus dem Eisenoxid katalysiert.

Die erfindungsgemäße Vorrichtung zur Durchführung des Verfahrens umfasst eine Granulierkammer mit einem Becken und ein darin aufgenommenes Wasserbad, eine Aufgabevorrichtung für die Schlackenschmelze in Form eines in das Becken reichenden Tauchrohrs sowie einen zur Rotation antreibbaren Rotor im Becken unterhalb des Tauchrohrs, um das Wasserbad zur Ausbildung einer Trombe in Rotation zu versetzen und ist erfindungsgemäß dadurch gekennzeichnet, dass die Aufgabevorrichtung einen Schmelzebehälter für die Schlackenschmelze umfasst, der in seinem Boden eine konzentrisch zum Tauchrohr angeordnete Öffnung aufweist, die mit einem in zum Tauchrohr axialer Richtung verschiebbaren Stößel verschließbar ist.

Mit der erfindungsgemäßen Vorrichtung ist es möglich, die Schlackenschmelze, enthaltend P₂O₅ und Eisenoxid sowie weiters enthaltend CaO und SiO₂ sowie Al₂O₃ durch das zwischen der konzentrisch im Boden des Schmelzebehälters für die Schlackenschmelze angeordneten Öffnung und dem in axialer Richtung verschiebbaren Stößel gebildeten Ringspalt als möglichst dünnwandigen Schmelzezylinder aus dem Schmelzebehälter in das Tauchrohr eintreten zu lassen, sodass die Schlackenschmelze bereits als dünne Schicht auf das Wasserbad trifft, welches durch die Wirkung des zur Rotation antreibbaren Rotors im Becken unterhalb des Tauchrohrs einen Wirbel und somit eine Trombe ausbildet, sodass die auf das rotierende Wasserbad auftreffende Schlackenschmelze sofort zerteilt und dadurch im Wasserbad dispergiert wird. Auf diese Weise tritt eine überaus rasche Abkühlung der Schlackenschmelze ein, sodass eine vollständige Verglasung zu amorphem Schlackenglas erreicht werden kann.

Für die Zugabe eines Oxidationsmittels ist die erfindungsgemäße Vorrichtung bevorzugt dahingehend weitergebildet, dass eine Zuleitung für ein gasförmiges Oxidationsmittel axial durch den Stößel geführt ist. Auf diese Weise wird das Oxidationsmittel bereits im Tauchrohr in die dünne Schicht der Schlackenschmelze eingebracht und tritt zusammen mit der Schlackenschmelze in das Wasserbad ein und wird dort ebenfalls dispergiert, sodass es zu einer effektiven Oxidation der Ausgangsschlackenschmelze und damit zur Umsetzung von Eisenoxiden zu Magnetit beziehungsweise Spinell und ggf. von Schwefeloxiden zu Sulfat und somit zur Bildung von Gips kommt.

Das amorphe Schlackenglas hat eine überaus geringe Dichte und schwimmt daher nach dem Austrag aus dem Bereich des Rotors auf der Trombe des Wasserbads auf. Zum Austrag des in der erfindungsgemäßen Vorrichtung gebildeten hydraulischen Bindemittels ist die Vorrichtung daher derart ausgebildet, dass die Granulierkammer einen an ein Wehr anschließenden Austragsbereich für granuliertes Schlackenglas aufweist, wobei bevorzugt im Austragsbereich eine Siebfläche zum Abziehen von Brüden in einen Brüdenabzug angeordnet ist, wie dies einer bevorzugten Ausführungsform der vorliegenden Erfindung entspricht. Alternativ kann zum Abtrennen von Feuchtigkeit auch ein Hydrozyklon oder eine Schubzentrifuge vorgesehen sein. Der Rotor kann in Bezug auf seine Drehzahl so eingestellt werden, dass die Trombe bis knapp an die Oberkante des Wehrs heranreicht, sodass aufschwimmendes Schlackenglas über das Wehr und in den an das Wehr anschließenden Auftragsbereich gefördert wird, sodass das Schlackenglas aus der Granulierkammer ausgetragen werden kann. Die gemäß der bevorzugten Ausführungsform im Austragsbereich angeordnete Siebfläche gestattet es, dass eventuell an dem Schlackenglas anhaftende Feuchtigkeit und insbesondere Brüden durch die Siebfläche abgezogen werden können. Es wird nach der Siebfläche daher ein vollkommen trockenes Schlackenglas erhalten, welches beispielsweise durch die Wirkung einer Zellradschleuse abgefördert werden kann.

Gemäß einer bevorzugten Ausführungsform der vorliegenden Erfindung bildet der Brüdenabzug einen Siphon aus, der mit dem Becken kommuniziert. Auf diese Weise kann der Brüden, der im Brüdenabzug unterhalb der Siebfläche kondensiert, direkt dem Wasserbad wieder zugeführt werden.

Die Erfindung wird nachfolgend anhand eines in der Zeichnung schematisch dargestellten Ausführungsbeispiels näher erläutert.

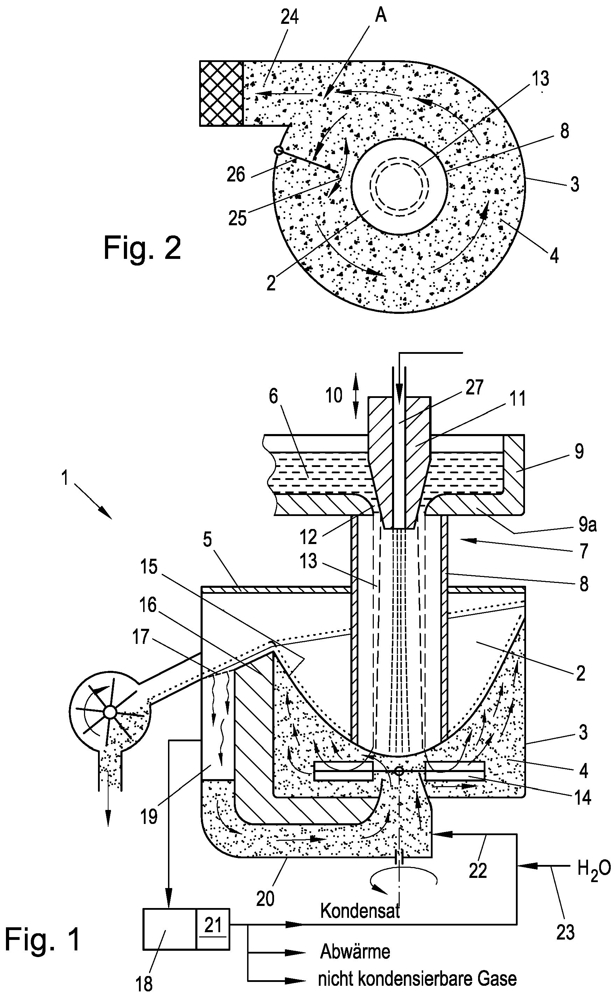

In dieser zeigen Fig. 1 eine seitliche Schnittdarstellung der erfindungsgemäßen Vorrichtung und Fig. 2 einen Höhenschnitt quer zu axialen Richtung in Höhe des Wehrs und somit in Höhe des Austragsbereichs aus der Granulierkammer.

In Fig. 1 ist die erfindungsgemäße Vorrichtung zur Durchführung des erfindungsgemäßen Verfahrens mit dem Bezugszeichen 1 bezeichnet. Die Vorrichtung 1 weist eine Granulierkammer 2 auf, die ein Becken 3 zur Aufnahme eines Wasserbads 4 ausbildet. Die Granulierkammer 2 ist an einem oberen Ende mit einem Deckel 5 verschlossen, damit bei der Granulation der Schlackenschmelze gebildete Brüden nicht unkontrolliert austreten können. Eine Aufgabevorrichtung für die Schlackenschmelze 6 ist mit dem Bezugszeichen 7 bezeichnet. Die Aufgabevorrichtung 7 besteht im Wesentlichen aus einem in das Becken 3 reichenden Tauchrohr 8, einem Schmelzebehälter 9 für die Schmelze 6 und einen in axialer Richtung 10 verschiebbaren Stößel 11, der eine im Boden 9a des Schmelzebehälters 9 angeordnete Öffnung 12 verschließen oder freigeben kann. Eine Zuleitung 27 für das Oxidationsmittel ist axial durch den Stößel 11 geführt. Bei Freigabe der Öffnung 12 durch den Stößel 11 tritt ein hohlzylindrischer Film 13 der Schlackenschmelze 6 in das Tauchrohr 8 ein und trifft in der Folge auf die Oberfläche einer im Wasserbad 4 durch die Wirkung des Rotors 14 gebildeten Trombe 15 und wird dort sofort dispergiert und zerkleinert. Im Wasserbad 4 findet auf diese Weise eine überaus rasche Abkühlung der Schlackenschmelze zu amorphem Schlackenglas statt und das erstarrte Schlackenglas schwimmt an der Oberfläche der Trombe 15 auf. Bei entsprechender Einstellung der Drehzahl des Rotors 14 erreicht das gebildete Schlackenglas die Höhe des Wehrs 16 und wird über das Wehr 16 ausgetragen. Das Schlackenglas läuft beim Austrag über eine Entwässerungsvorrichtung in Form einer Siebfläche 17, wo es zu einem Abzug von Brüden direkt aus dem Schlackenglas kommen kann, wobei der Brüden durch die Wirkung eines Absauggebläses 18 aus dem Brüdenabzug 19 abgezogen wird. Eventuell im Brüdenabzug 19 kondensierender Brüden wird durch einen durch den Brüdenabzug 19 gebildeten Siphon 20, der mit dem Wasserbad 4 kommuniziert, dem Wasserbad wiederum zugeführt. Der Brüden kann anschließend einem Kompressor 21 zugeführt werden, in dem eine adiabate Kompression des Brüdens erfolgt, sodass Kondensat gebildet und über eine Leitung 22 dem Wasserbad 4 rückgeführt werden kann. Bei einer Thermokompression entsteht weiters Abwärme in Mengen von ungefähr 460 kWh/t Ausgangsschlackenschmelze. Nach dem Kompressor 21 können weiters nicht kondensierbare Gase abgezogen werden. Über eine Leitung 23 kann zusätzlich Wasser zum Ausgleich von Verlusten im Wasserbad zugeführt werden.

In Fig. 2 sind gleiche Teile mit gleichen Bezugszeichen versehen, und es ist zu erkennen, dass die Granulierkammer 2 im Wesentlichen einen rotationssymmetrischen Querschnitt aufweist, der für die Ausbildung einer Trombe durch die Wirkung des Rotors 14 geeignet ist. Das amorphe Schlackenglas tritt in den Austragsbereich 24, der tangential aus dem Wasserbecken ausleitet, wobei das in Fig. 1 im Schnitt dargestellte Wehr 15 in jenem Bereich angeordnet ist, der in Figur 2 mit dem Bezugszeichen A gekennzeichnet ist. Im Bereich des Beckens 3 kann in Rotationsrichtung der Trombe 15, die durch die kreisförmig eingezeichneten Pfeile in Figur 2 angedeutet ist, hinter der Ausleitung in den Austragsbereich 24 ein im Sinne des Doppelpfeils 25 verstellbares Leitelement 26 angeordnet sein, mit dem das auf der Trombe aufschwimmende Schlackenglas zusätzlich zum Wehr 16 hin aufgestaut werden kann. Das Leitelement 26 kann hierzu auch in Form eines Rechens ausgebildet sein, um die Ausbildung der Trombe 15 nicht übermäßig zu behindern. Eine Entwässerungsvorrichtung in Form einer Siebfläche ist wiederum mit dem Bezugszeichen 17 versehen. Wie bereits erwähnt kann die Entwässerungsvorrichtung aber auch als Hydxrozyklon oder als Schubzentrifuge ausgebildet sein.

## Patentansprüche

1. Verfahren zur Herstellung von amorphem Schlackenglas, bei dem eine Schlackenschmelze enthaltend P₂O₅ und Eisenoxid sowie weiters enthaltend CaO und SiO₂ unter Zugabe eines Oxidationsmittels für das Eisenoxid einem Kühlschritt zur Granulierung der Schlackenschmelze (6) zu amorphem Schlackenglas unterzogen wird, **dadurch gekennzeichnet, dass** die Schlackenschmelze (6) einen P₂O₅-Gehalt von 7,5 Gew.-% bis 30 Gew.-%, weiter bevorzugt 12,5 Gew.-% bis 20 Gew.-% und besonders bevorzugt von 17 Gew.-% bis 19 Gew.-% aufweist und dass der Schlackenschmelze (6) vor dem Kühlschritt elementares Aluminium zugesetzt wird und dass dabei gebildetes P₂ und CO aus der Gasphase abgezogen wird.

2. Verfahren nach Anspruch 1, **dadurch gekennzeichnet, dass** die Basizität (CaO Gew.-%/SiO₂ Gew.-%) der Schlackenschmelze (6) vor dem Kühlschritt durch Zugabe eines Kalkträgers oder eines Aluminiumträgers auf einen Wert von 0,85 bis 1,3 eingestellt wird.

3. Verfahren nach Anspruch 1 oder 2, **dadurch gekennzeichnet, dass** der Schlackenschmelze (6) vor dem Kühlschritt Calciumcarbid zugesetzt wird, bevorzugt zusammen mit Kohlestaub, und dass dabei gebildetes P₂ und CO aus der Gasphase abgezogen wird.

4. Verfahren nach einem der Ansprüche 1 bis 3, **dadurch gekennzeichnet, dass** die Schlackenschmelze (6) vor dem Kühlschritt einer elektrochemischen Reduktion von P₂O₅ unterzogen wird, bevorzugt bei einer Elektrodenspannung von 16 V bis 24 V, und dass dabei gebildetes P₂ als Kathodengas abgezogen wird.

5. Verfahren nach einem der Ansprüche 1 bis 4, **dadurch gekennzeichnet, dass** der Kühlschritt darin besteht, die Schlackenschmelze (6) in ein Wasserbad (4) zu dispergieren, wobei das Wasserbad (4) für die Schlackenschmelze (6) bevorzugt bei einer Temperatur zwischen 80°C und dem Siedepunkt vorgehalten wird, bevorzugt zwischen 85°C und dem Siedepunkt, weiter bevorzugt zwischen 90°C und dem Siedepunkt und insbesondere bevorzugt zwischen 95°C und dem Siedepunkt.

6. Verfahren nach Anspruch 5, **dadurch gekennzeichnet, dass** beim Kühlschritt entstehender Brüden aus dem Wasserbad (4) aufgefangen, kondensiert und dem Wasserbad (4) wieder zugeführt wird, wobei die Kondensation bevorzugt in Form einer adiabaten Kompression durchgeführt wird zur Gewinnung von Abwärme aus dem Brüden.

7. Verfahren nach Anspruch 3, **dadurch gekennzeichnet, dass** beim Kühlschritt entstehender Brüden aus dem Wasserbad (4) aufgefangen, kondensiert und dem Wasserbad (4) wieder zugeführt wird, wobei der Brüden durch Kompression auf eine Temperatur zwischen 180°C und 220°C gebracht und die Wärme des Brüden zur Trocknung von mechanisch entwässertem Klärschlamm eingesetzt wird.

8. Verfahren nach einem der Ansprüche 1 bis 7, **dadurch gekennzeichnet, dass** als Oxidationsmittel ein Sauerstoffträger eingesetzt wird, insbesondere Luft, O₂, CO₂, Wasser und/oder Wasserdampf.

9. Verfahren nach einem der Ansprüche 1 bis 8, **dadurch gekennzeichnet, dass** das granulierte Schlackenglas gemahlen wird, bevorzugt auf Korngrößen von kleiner als 80 Mikrometer.

10. Verfahren nach Anspruch 9, **dadurch gekennzeichnet, dass** Eisenanteile aus dem gemahlenen Schlackenglas magnetisch abgeschieden werden.

11. Vorrichtung zur Durchführung des Verfahrens nach einem der Ansprüche 1 bis 10, umfassend eine Granulierkammer (2) mit einem Becken (3) und ein darin aufgenommenes Wasserbad (4), eine Aufgabevorrichtung (7) für die Schlackenschmelze (6) in Form eines in das Becken (3) reichenden Tauchrohrs (8) sowie einen zur Rotation antreibbaren Rotor (14) im Becken (3) unterhalb des Tauchrohrs (8), um das Wasserbad (4) zur Ausbildung einer Trombe (15) in Rotation zu versetzen, **dadurch gekennzeichnet, dass** die Aufgabevorrichtung (7) einen Schmelzebehälter (9) für die Schlackenschmelze (6) umfasst, der in seinem Boden (9a) eine konzentrisch zum Tauchrohr (8) angeordnete Öffnung (12) aufweist, die mit einem in zum Tauchrohr (8) axialer Richtung (10) verschiebbaren Stößel (11) verschließbar ist.

12. Vorrichtung nach Anspruch 11, **dadurch gekennzeichnet, dass** eine Zuleitung (27) für ein gasförmiges Oxidationsmittel axial durch den Stößel (11) geführt ist.

13. Vorrichtung nach Anspruch 11 oder 12, **dadurch gekennzeichnet, dass** die Granulierkammer (2) einen an ein Wehr (16) anschließenden Austragsbereich (24) für granuliertes Schlackenglas aufweist, wobei bevorzugt im Austragsbereich (24) eine Siebfläche (17), ein Hydrozyklon oder eine Schubzentrifuge zum Abziehen von Brüden in einen Brüdenabzug (19) angeordnet ist.

14. Vorrichtung nach Anspruch 11, 12 oder 13, **dadurch gekennzeichnet, dass** der Brüdenabzug (19) einen Siphon (20) ausbildet, der mit dem Becken (3) kommuniziert.

## Claims

1. A method for producing amorphous slag glass, in which a slag melt containing P₂O₅ and iron oxide and also containing CaO and SiO₂ with the addition of an oxidizing agent for the iron oxide is subjected to a cooling step for granulating the slag melt (6) to form amorphous slag glass, **characterized in that** the slag melt (6) has a P₂O₅ content of 7.5 wt.% to 30 wt. %, preferably 12.5 wt.% to 20 wt.% and more preferably 17 wt.% to 19 wt.%, and **in that** the slag melt (6), before the cooling step, is supplemented with elemental aluminum and **in that** P₂ and CO formed thereby is drawn off from the gas phase.

2. The method according to claim 1, **characterized in that** the basicity (CaO wt.%/SiO₂ wt.%) of the slag melt (6) is set to a value of 0.85 to 1.3 before the cooling step by adding a lime carrier or an aluminum carrier.

3. The method according to claim 1 or 2, **characterized in that** calcium carbide is added to the slag melt (6) before the cooling step, preferably together with coal dust, and that P₂ and CO formed thereby is drawn off from the gas phase.

4. The method according to any one of claims 1 to 3, **characterized in that** the slag melt (6) is subjected to an electrochemical reduction of P₂O₅ before the cooling step, preferably at an electrode voltage of 16 V to 24 V, and that the P₂ formed thereby is drawn off as cathode gas.

5. The method according to any one of claims 1 to 4, **characterized in that** the cooling step consists in dispersing the slag melt (6) in a water bath (4), the water bath (4) for the slag melt (6) being preferably at a temperature between 80°C and the boiling point, preferably between 85°C and the boiling point, more preferably between 90°C and the boiling point and particularly preferably between 95°C and the boiling point.

6. The method according to claim 5, **characterized in that** vapors from the water bath (4) arising during the cooling step are collected, condensed and fed back to the water bath (4), the condensation preferably being carried out in the form of an adiabatic compression for the recovery of waste heat from the vapors.

7. The method according to claim 3, **characterized in that** vapors from the water bath (4) produced during the cooling step are collected, condensed and fed back to the water bath (4), the vapors being brought to a temperature between 180°C and 220°C by compression and the heat of the vapors is used to dry mechanically dewatered sewage sludge.

8. The method according to any one of claims 1 to 7, **characterized in that** an oxygen carrier is used as the oxidizing agent, in particular air, O₂, CO₂, water and/or steam.

9. The method according to any one of claims 1 to 8, **characterized in that** the granulated slag glass is ground, preferably to a particle size of less than 80 microns.

10. The method according to claim 9, **characterized in that** iron components are magnetically separated from the ground slag glass.

11. A device for carrying out the method according to any one of claims 1 to 10, comprising a granulation chamber (2) with a basin (3) and a water bath (4) accommodated therein, a feed device (7) for the slag melt (6) in the form of an immersion tube (8) reaching into the basin (3) and comprising a rotatably drivable rotor (14) in the basin (3) below the immersion tube (8) to rotate the water bath (4) to form a vortex (15), **characterized in that** the feed device (7) comprises a melt container (9) for the slag melt (6), which in its base (9a) has an opening (12) which is arranged concentrically to the immersion tube (8) and which can be closed by a plunger (11) displaceable in the axial direction (10) relative to the immersion tube (8).

12. The device according to claim 11, **characterized in that** a supply line (27) for a gaseous oxidizing agent is guided axially through the plunger (11).

13. The device according to claim 11 or 12, **characterized in that** the granulation chamber (2) has a discharge area (24) for granulated slag glass downstream of a weir (16), preferably with a sieve surface (17), a hydrocyclone or a pusher centrifuge for withdrawing vapors into a vapor outlet (19) being arranged in the discharge area (24).

14. The device according to claim 11, 12 or 13, **characterized in that** the vapor outlet (19) forms a siphon (20) which communicates with the basin (3).

## Revendications

1. Procédé de fabrication de verre de laitier amorphe, dans lequel une masse fondue de laitier contenant du P₂O₅ et de l'oxyde de fer ainsi que contenant en outre du CaO et du SiO₂ est soumise, avec addition d'un agent oxydant pour l'oxyde de fer, à une étape de refroidissement pour la granulation de la masse fondue de laitier (6) en verre de laitier amorphe, **caractérisé en ce que** la masse fondue de laitier (6) présente une teneur en P₂O₅ de 7,5 % en poids à 30 % en poids, de manière davantage préférée de 12,5 % en poids à 20 % en poids et de manière particulièrement préférée de 17 % en poids à 19 % en poids, et **en ce que** de l'aluminium élémentaire est ajouté à la masse fondue de laitier (6) avant l'étape de refroidissement, et **en ce que** du P₂ et du CO formés lors de cela sont évacués de la phase gazeuse.

2. Procédé selon la revendication 1, **caractérisé en ce que** la basicité (% en poids de CaO % en poids de SiO₂) de la masse fondue de laitier (6) est ajustée, avant l'étape de refroidissement, à une valeur de 0,85 à 1,3 par addition d'un porteur de chaux ou d'un porteur d'aluminium.

3. Procédé selon la revendication 1 ou 2, **caractérisé en ce que** du carbure de calcium est ajouté à la masse fondue de laitier (6) avant l'étape de refroidissement, de préférence conjointement avec de la poussière de charbon, et **en ce que** du P₂ et du CO formés lors de cela sont évacués de la phase gazeuse.

4. Procédé selon l'une des revendications 1 à 3, **caractérisé en ce que** la masse fondue de laitier (6) est soumise, avant l'étape de refroidissement, à une réduction électrochimique de P₂O₅, de préférence à une tension d'électrode de 16 V à 24 V, et **en ce que** du P₂ formé lors de cela est évacué en tant que gaz cathodique.

5. Procédé selon l'une des revendications 1 à 4, **caractérisé en ce que** l'étape de refroidissement consiste à disperser la masse fondue de laitier (6) dans un bain d'eau (4), le bain d'eau (4) pour la masse fondue de laitier (6) étant maintenu de préférence à une température comprise entre 80 °C et le point d'ébullition, de préférence entre 85 °C et le point d'ébullition, de manière davantage préférée entre 90 °C et le point d'ébullition et de manière particulièrement préférée entre 95 °C et le point d'ébullition.

6. Procédé selon la revendication 5, **caractérisé en ce que** des buées générées lors de l'étape de refroidissement à partir du bain d'eau (4) sont collectées, condensées et réintroduites dans le bain d'eau (4), la condensation étant effectuée de préférence sous la forme d'une compression adiabatique pour la récupération de chaleur résiduelle à partir des buées.

7. Procédé selon la revendication 3, **caractérisé en ce que** des buées générées lors de l'étape de refroidissement à partir du bain d'eau (4) sont collectées, condensées et réintroduites dans le bain d'eau (4), les buées étant amenées par compression à une température comprise entre 180 °C et 220 °C et la chaleur des buées étant utilisée pour le séchage de boues d'épuration déshydratées mécaniquement.

8. Procédé selon l'une des revendications 1 à 7, **caractérisé en ce qu'**un porteur d'oxygène est utilisé en tant qu'agent oxydant, en particulier de l'air, de l'O₂, du CO₂, de l'eau et/ou de la vapeur d'eau.

9. Procédé selon l'une des revendications 1 à 8, **caractérisé en ce que** le verre de laitier granulé est broyé, de préférence à des granulométries inférieures à 80 micromètres.

10. Procédé selon la revendication 9, **caractérisé en ce que** des fractions de fer sont séparées magnétiquement du verre de laitier broyé.

11. Dispositif pour la mise en œuvre du procédé selon l'une des revendications 1 à 10, comprenant une chambre de granulation (2) pourvue d'un bassin (3) et d'un bain d'eau (4) reçu dans celui-ci, un dispositif d'alimentation (7) pour la masse fondue de laitier (6) sous la forme d'un tube plongeant (8) s'étendant dans le bassin (3), ainsi qu'un rotor (14) pouvant être entraîné en rotation dans le bassin (3) en dessous du tube plongeant (8), afin de mettre le bain d'eau (4) en rotation pour la formation d'un vortex (15), **caractérisé en ce que** le dispositif d'alimentation (7) comprend un récipient de masse fondue (9) pour la masse fondue de laitier (6), lequel présente dans son fond (9a) une ouverture (12) agencée de manière concentrique par rapport au tube plongeant (8), laquelle peut être fermée au moyen d'un poussoir (11) déplaçable dans une direction axiale (10) par rapport au tube plongeant (8).

12. Dispositif selon la revendication 11, **caractérisé en ce qu'**un conduit d'amenée (27) pour un agent oxydant gazeux est guidé axialement à travers le poussoir (11).

13. Dispositif selon la revendication 11 ou 12, **caractérisé en ce que** la chambre de granulation (2) présente une zone de décharge (24) pour du verre de laitier granulé, se raccordant à un déversoir (16), une surface de tamisage (17), un hydrocyclone ou une centrifugeuse à poussoir étant agencé(e), de préférence, dans la zone de décharge (24) pour évacuer des buées dans une évacuation de buées (19).

14. Dispositif selon la revendication 11, 12 ou 13, **caractérisé en ce que** l'évacuation de buées (19) forme un siphon (20) qui communique avec le bassin (3).
